# FASCICULE DE BREVET EUROPEEN

(11) **EP 0 980 633 B1**
(45) Date de publication et mention de la délivrance du brevet: **15.09.2004**
(21) Numéro de dépôt: 98924388.6
(22) Date de dépôt: 06.05.1998
(51) Int. Cl.: H04Q 7/24, H04Q 3/00

(54) **RESEAU DE TELECOMMUNICATIONS AYANT DES ABONNES FIXES ET MOBILES**
TELEKOMMUNIKATIONSNETZ MIT FESTEN UND MOBILEN TEILNEHMERN
TELECOMMUNICATION NETWORK WITH FIXED AND MOBILE SUBSCRIBERS

(30) Priorité: 07.05.1997 FR 9705666
(43) Date de publication de la demande: 23.02.2000
(73) Titulaire: FRANCE TELECOM, 75015 Paris (FR)
(72) Inventeur: NEVOUX, Rola, F-78990 Elancourt (FR); CHATRAS, Bruno, F-75012 Paris (FR)
(74) Mandataire: Loisel, Bertrand
(86) Numéro de dépôt international: PCT/FR1998/000910
(87) Numéro de publication internationale: WO 1998/051105

(56) Documents cités:
- EP-A- 0 433 465
- EP-A- 0 660 572

## Description

La présente invention se rapporte aux réseaux de télécommunications destinés à accueillir à la fois des abonnés fixes et des abonnés mobiles.

Dans les réseaux de télécommunications actuels, la gestion des abonnés fixes est effectuée dans des commutateurs dits CAA (Commutateur à Autonomie d'Acheminement) qui contiennent leurs profils de service et gèrent leurs accès physiques.

Les abonnés mobiles sont gérés par des commutateurs spécifiques dits MSC (« Mobile Switching Center »). Ces abonnés mobiles n'ayant pas un point de rattachement statique comme les abonnés fixes, leurs profils de service sont stockés dans des bases de données nominales. Dans les systèmes GSM et analogues, ces bases de données nominales sont appelées HLR (« Home Location Register »). Le commutateur MSC offre les services aux abonnés mobiles conformément à leurs profils de service. Certains commutateurs mobiles disposent localement d'une base de données des abonnés en visite (VLR : « Visitor Location Register ») qui contient des copies des enregistrements de la base de données nominale concernant les abonnés mobiles desservis. Cette architecture reste spécifique aux abonnés mobiles et ne permet pas d'intégrer des abonnés fixes qui n'ont pas besoin de mobilité.

Un opérateur qui souhaite avoir deux types d'abonnés (fixes et mobiles) doit disposer de deux infrastructures dédiées : l'une pour les abonnés fixes et l'autre pour les abonnés mobiles, ou bien développer une logique de service pour les abonnés fixes et une similaire pour les abonnés mobiles.

En effet, même s'ils sont gérés à partir d'un réseau fixe grâce à une architecture de réseau intelligent (RI), les abonnés mobiles ne sont pas intégrés dans les commutateurs d'accès (CAA), mais disposent plutôt de leurs profils de service dans une base de données nominale dite BDS (Base de Données de Service). La logique de service pour gérer la mobilité et offrir les services supplémentaires à ces abonnés mobiles se trouve localisée dans un PCS (Point de Commande de Service), c'est-à-dire une plate-forme du réseau intelligent qui commande et assiste les commutateurs du réseau fixe dans l'offre de services destinée à ces abonnés mobiles.

Accueillir des abonnés mobiles sur une infrastructure réseau fixe nécessite à ce jour des développements spécifiques redondants pour prendre en compte ces nouveaux abonnés. Par exemple, on doit dupliquer au niveau du PCS un certain nombre de fonctions et de services dédiés à la gestion de ces abonnés.

Une telle solution n'est pas du tout intégrée, c'est-à-dire qu'elle ne profite pas des fonctions et des services existants dans l'infrastructure. En effet, l'intégralité du traitement des services est déportée sur le PCS, même si une fonction équivalente réside dans le CAA pour les abonnés fixes.

La demande de brevet EP-A-0 660 672 décrit un réseau de télécommunications auquel des terminaux mobiles sont susceptibles d'être raccordés par l'intermédiaire de différents systèmes de commutation. Des profils de service différents sont associés aux terminaux mobiles suivant le système de commutation auprès duquel ils sont enregistrés. En particulier, le terminal mobile peut être associé à un terminal fixe avec lequel il partage un numéro d'annuaire. Dans le profil de service correspondant, certaines caractéristiques sont associées seulement au terminal mobile, et d'autres sont associés au numéro d'annuaire partagé. Le système décrit dans ce document implique la gestion de plusieurs profils de service pour un même terminal.

La présente invention a pour but de définir une solution qui permette d'intégrer des abonnés mobiles dans des CAA d'abonnés fixes et d'offrir les mêmes services et les mêmes fonctions réseau à ces deux types d'abonné.

L'invention propose ainsi un réseau de télécommunications comprenant des commutateurs d'accès qui comportent chacun une table contenant des données de service relatives à des abonnés fixes pourvus de terminaux qui lui sont reliés de façon permanente, et au moins une base de données nominale pour des abonnés mobiles capables d'accéder au réseau par l'intermédiaire de plusieurs des commutateurs d'accès. La base de données nominale contient, pour chacun des abonnés mobiles, des données de service de même nature que les données de service relatives aux abonnés fixes et des données de gestion de mobilité. La table de données de service de chaque commutateur d'accès par l'intermédiaire duquel des abonnés mobiles sont capables d'accéder au réseau est prévue pour recevoir, outre les données de service relatives aux abonnés fixes, les données de service relatives aux abonnés mobiles raccordés au réseau par l'intermédiaire dudit commutateur d'accès, qui ont été téléchargées depuis la base de données nominale lors de procédures de localisation desdits abonnés mobiles auprès du commutateur d'accès.

Les données de service relatives aux abonnés mobiles sont contenues dans les mêmes tables que celles des abonnés fixes et gérées par les mêmes logiques. Ceci a l'avantage, au point de vue de l'utilisateur, de disposer des mêmes services quelle que soit sa caractéristique (fixe ou mobile) et/ou quel que soit le type d'accès qu'il utilise (filaire ou radio). En outre, un opérateur de réseau peut optimiser ses développements en les offrant à tous les types d'abonnés (fixe ou mobile) et tous les types d'accès (filaire ou radio).

D'autres particularités et avantages de la présente invention apparaîtront dans la description ci-après d'un exemple de réalisation non limitatif, en référence aux dessins annexés, dans lesquels :
- la figure 1 est un schéma d'un exemple d'architecture de réseau selon l'invention ; et
- les figures 2, 3 et 4 sont des diagrammes illustrant des messages échangés dans un réseau selon la figure 1 lors d'une procédure de localisation d'un abonné mobile, à l'établissement d'un appel initié par un abonné mobile et à l'établissement d'un appel destiné à un abonné mobile.

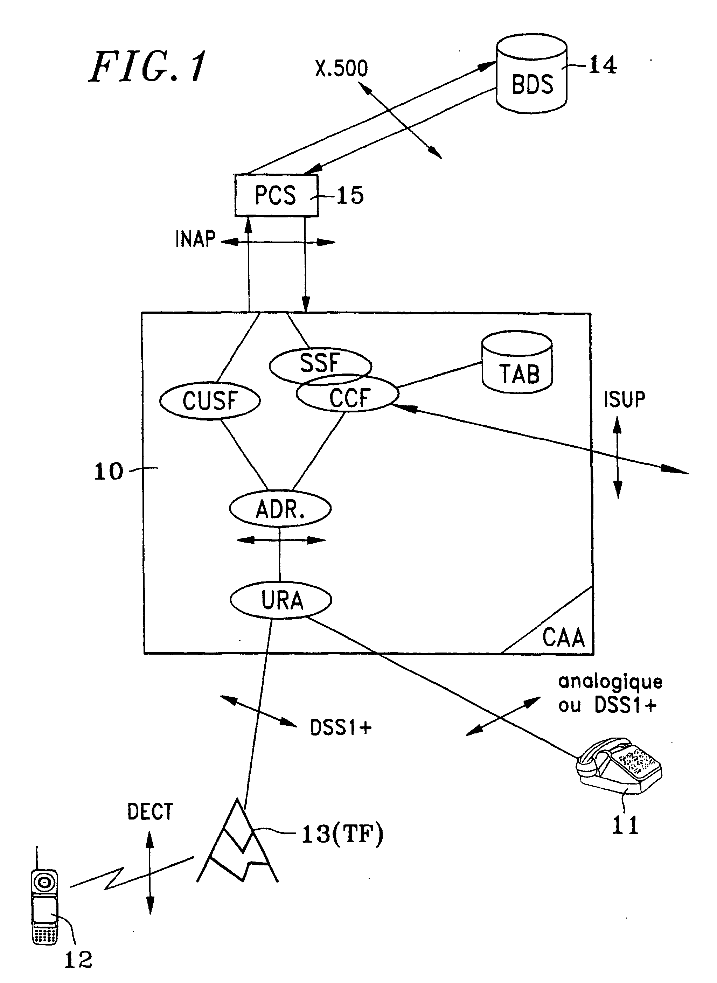

La figure 1 montre un commutateur d'accès 10 d'un réseau de télécommunications selon l'invention. Ce commutateur 10 est un commutateur d'abonnés fixes à autonomie d'acheminement CAA. On l'appelle ici « commutateur d'accès » dans la mesure où tout appel ou demande de service concernant un abonné fixe qui lui est rattaché passe par ce CAA, qui contient des ressources permettant de gérer l'appel ou la demande de service. Au sein du réseau, les différents CAA sont interconnectés entre eux et avec des commutateurs de transit.

De façon classique, le CAA 10 dispose, entre autres, des fonctions suivantes :
- une fonction de contrôle d'appel (CCF : « Call Control Function ») ;
- une fonction CAS (« Commutateur d'Accès aux Services »), ou SSF (« Service Switching Function ») ;
- une fonction CUSF (« Call Unrelated Service Function ») permettant de relayer des dialogues hors appel entre une fonction usager et une fonction externe au CCF ;
- une table d'abonné TAB contenant les profils de service des abonnés fixes ;
- une fonction ADR d'adressage de l'appel et des transactions hors appel vers les unités de raccordement d'abonnés (URA) du réseau d'accès où se trouvent raccordées les installations 11 d'abonnés fixes. Cette adresse est par exemple obtenue via le Numéro de Désignation d'Installation (ou NDI) attribué aux installations d'abonnés filaires.

On considère le cas où le réseau selon l'invention supporte l'architecture d'un réseau intelligent pour les services fournis aux abonnés. On aura reconnu que les entités fonctionnelles CCF, CAS/SSF et CUSF susmentionnées sont alors celles définies dans la Recommandation Q.1224 de l'UIT-T.

Chaque abonné fixe est déclaré dans son CAA par un numéro de désignation d'installation NDI qui correspond par exemple à son numéro d'annuaire. Il lui est associé un profil de service mémorisé dans la table TAB, en relation avec le NDI. Ce profil contient les droits aux services auxquels l'abonné a souscrit et les paramètres utiles à l'exécution de ces services. Pour le traitement d'un appel ou d'une demande de service concernant le terminal 11 d'un abonné fixe, la fonction CCF ou CUSF consulte la table TAB pour connaître les droits de l'abonné et obtenir les paramètres utiles à ce traitement. Le traitement en question peut être exécuté soit au niveau du CAA (cela pourra être le cas, par exemple, pour des services tels que les restrictions d'appel, le renvoi d'appel, le rappel d'abonné occupé, le filtrage d'appels...), soit dans un point de commande de service (PCS, ou SCP : « Service Control Point ») externe au CAA (par exemple services de libre appel, de taxation sur carte de crédit...).

Le réseau selon l'invention, illustré par la figure 1, est apte à gérer en outre des abonnés mobiles. On considère le cas où ces abonnés mobiles utilisent des terminaux portables 12 pour communiquer avec le réseau via des bornes radio fixes 13. Mais on comprendra que l'accès d'un abonné mobile pourrait se faire par divers types de terminaux filaires ou radio, comme dans le cadre des télécommunications personnelles universelles (UPT).

Chaque borne radio 13 du réseau est reliée à une unité de raccordement d'abonnés URA d'un CAA, directement ou par l'intermédiaire d'un concentrateur de bornes. Les URA du CAA comportent donc, outre des ports reliés à des installations filaires 11, des ports reliés à des terminaisons fixes (TF) de réseau radio consistant chacune en une borne 13 (figure 1) ou en un concentrateur de bornes.

Les données que le réseau a besoin de stocker pour gérer les abonnés mobiles sont stockées dans une ou plusieurs bases de données nominales (BDS) 14. Ces données comprennent :
- des données de service du même type que celles stockées dans les tables TAB des CAA, permettant d'offrir les mêmes services aux abonnés mobiles qu'aux abonnés fixes ;
- des données de gestion de mobilité qui sont traitées pour tenir compte du fait que l'abonné mobile est susceptible d'être raccordé au réseau par différents CAA et/ou par différents accès d'un même CAA, et pour assurer la sécurité des communications impliquant l'abonné mobile.

Le traitement des données de mobilité peut être intégré dans les CAA ou, comme dans l'exemple illustré par la figure 1, déporté dans un PCS externe 15 pouvant dialoguer d'une part avec la BDS 14 et d'autre part avec les fonctions SSF et CUSF des CAA.

Lors d'une procédure de localisation d'un abonné mobile auprès d'un CAA 10, les données de service propres à cet abonné sont téléchargées depuis la BDS 14 dans la table TAB du CAA, par l'intermédiaire du PCS 15. Ces données sont ensuite traitées exactement de la même manière que celles relatives aux abonnés fixes pour l'exécution des services. Ceci présente un double avantage. Les utilisateurs peuvent bénéficier des mêmes services dans tous les cas. Pour l'opérateur du réseau, il n'est pas nécessaire de prévoir deux infrastructures ou deux logiques de service redondantes pour offrir les mêmes services aux différents types d'abonnés.

La création de l'abonné mobile dans les tables d'un CAA peut se faire sous plusieurs formes. Le choix d'une forme ou l'autre dépend des possibilités de gestion d'abonnés offertes par le CAA et/ou type de raccordement. Quelle que soit la variante employée, l'abonné mobile est toujours créé comme un abonné fixe. Trois variantes a, b et c sont considérées ci-dessous à titre d'exemple :
a) Pour chaque abonné mobile, une entrée est créée avec un NDI correspondant à son numéro d'annuaire. Le profil de service de l'abonné est associé à ce NDI. Le NDI est associé à un numéro identifiant un port de raccordement de la TF concernée. Le type d'identifiant (numéro logique de port, numéro d'équipement, ...) dépend du mode de raccordement. Lorsque l'abonné change de zone de localisation et passe ainsi d'une TF à une autre, le PCS 15 modifie l'association NDI/Identifiant de raccordement.
b) Chaque abonné est créé avec un NDS (« Numéro de Désignation Supplémentaire») correspondant à son numéro d'annuaire, associé au NDI correspondant à la TF concernée. Le profil de service de l'abonné est associé au NDS et non pas au NDI. Lorsqu'un abonné passe d'une TF à une autre, le PCS 15 modifie l'association NDS/NDI.
c) Identique à la variante b, mais le NDI correspond à une URA. Tous les abonnés localisés sous des TF raccordées à la même URA sont associés au même NDI. Cette alternative suppose des fonctions intelligentes dans l'URA qui doit savoir gérer une correspondance numéro d'abonné / TF. Lorsque l'abonné passe d'une TF à une autre raccordée à la même URA, l'URA modifie cette correspondance. En cas de passage d'une URA à une autre, le PCS modifie l'association NDS/NDI.

Pour commander la création d'un abonné fixe dans le CAA (TAB), plusieurs solutions sont envisageables :
- en envoyant au CAA des commandes simulant l'interface homme/machine (IHM) utilisée pour des besoins d'exploitation ;
- en utilisant les possibilités d'une interface de gestion (RGT) type Q3,
- ou via un protocole temps réel sur un réseau sémaphore de type SS7, tel qu'un protocole de type Commande à Distance, ou une évolution du protocole INAP (« Intelligent Network Application part », normalisé par l'UIT-T dans la Recommandation Q.1228).

Lorsqu'un terminal portable 12 détecte par la radio une nouvelle zone de localisation, il envoie une demande de localisation vers la TF via l'interface radio. La TF transmet cette demande à son tour vers le CAA via une transaction hors appel, sans établissement de circuit. A la réception de cette demande de localisation, la fonction CUSF du CAA reconnaît la nature « mobile » de la transaction, sur la base soit de la catégorie de l'accès dont il dispose dans ses tables si l'abonné mobile y est associé à la terminaison fixe, soit d'une information que la TF insère dans le protocole à chaque accès. La fonction CUSF transmet cette demande de localisation au PCS 15 de gestion de la mobilité. Le PCS 15 identifie l'abonné mobile en récupérant son identité mobile, retrouve l'adresse de la BDS nominale contenant le profil de service de l'abonné mobile, et retrouve via la BDS les données de sécurité faisant partie des données de gestion de mobilité relatives à l'abonné mobile en question. La logique 15 de gestion de la mobilité procède ensuite à l'authentification de l'abonné mobile. Si le résultat d'authentification est positif, le PCS 15 rapatrie de la BDS nominale le profil de service de l'abonné mobile ainsi que l'adresse du dernier CAA où cet abonné était localisé. Par la suite, la logique de gestion de la mobilité procède à la création d'une entrée dans la table des abonnés (TAB) du CAA correspondant au profil de service de l'abonné en question, comme indiqué précédemment.

Les données de sécurité de l'abonné mobile peuvent être selon les cas rapatriés au plus proche de l'abonné, par exemple dans le PCS 15 où se trouve la logique de gestion de la mobilité, ou bien rester centralisées au niveau de la BDS, la logique de gestion de la mobilité y accédant à chaque fois qu'elle en a besoin.

La logique de service de mobilité envoie une demande d'effacement de données à l'ancien CAA (TAB) où cet abonné mobile était localisé, et confirme la mise à jour de localisation vers le terminal portable 12.

Les figures 1 à 4 illustrent différents protocoles utilisables entre des entités d'un réseau selon l'invention, d'une manière qui, bien entendu, ne limite nullement la portée de l'invention :
- DECT (« Digital European Cordless Telephone », normalisé par l'ETSI dans les spécifications ETS 300 175) pour l'interface radio entre les terminaux portables 12 et les bornes 13 ;
- DSS1+ (protocole RNIS, normalisé par l'UIT-T dans les Recommandations de la série Q.900, et par l'ETSI) pour l'interface entre les bornes 13 et les URA des CAA ;
- DSS1+, ou analogique traditionnel, pour l'interface entre les URA et les terminaux fixes 11 ou autres installations filaires ;
- ISUP («Integrated Services User Part» spécifié dans les Recommandations de la série Q.700 de l'UIT-T) pour les liaisons entre les commutateurs du réseau ;
- INAP pour les échanges entre les fonctions SSF ou CUSF et le PCS de gestion de la mobilité 15 ;
- X.500 (autre protocole UIT-T spécifié dans la Recommandation Q.1228) pour les échanges entre le PCS 15 et la BDS 14.

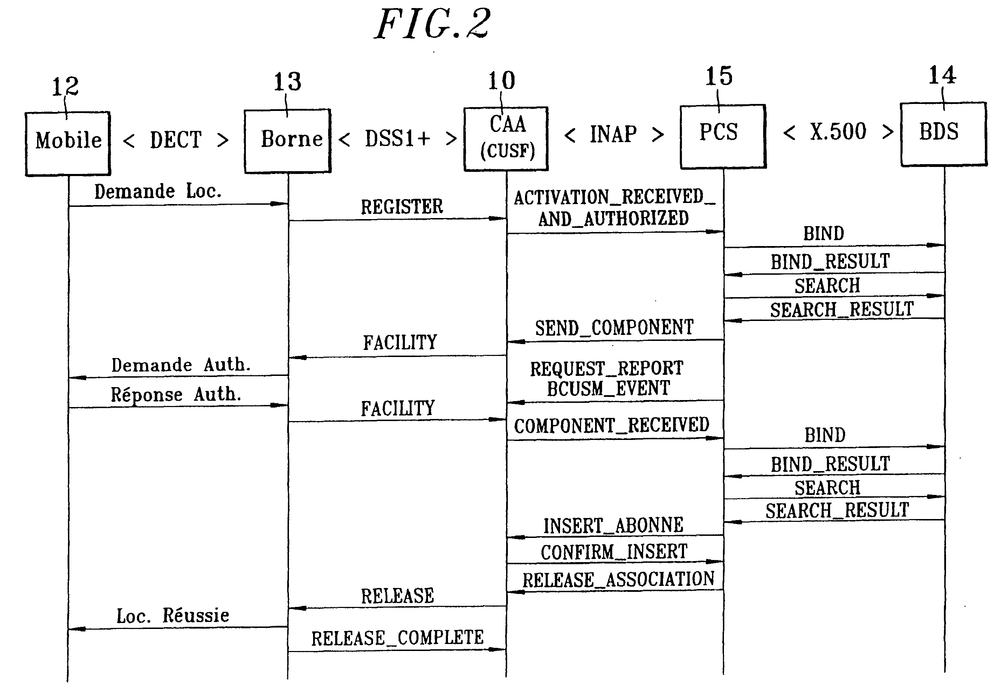

Dans cet exemple, la procédure de localisation d'un abonné mobile peut se dérouler comme montré sur la figure 2.

Quand le terminal mobile 12 de l'abonné détecte qu'il doit changer de zone de localisation, il émet une demande correspondante vers la borne 13, qui la relaie jusqu'au PCS 15 via la fonction CUSF du CAA 10 (messages REGISTER du protocole DSS1+ et ACTIVATION_RECEIVED_AND_AUTHORIZED du protocole INAP). Une transaction X.500 (messages BIND, BIND_RESULT, SEARCH, SEARCH_RESULT) a lieu entre la BDS 14 et le PCS pour que ce dernier récupère les données de sécurité de l'abonné. Le PCS 15 peut alors procéder à une demande d'authentification de l'abonné conformément à l'algorithme d'authentification employé dans le réseau. Cette demande d'authentification est transmise dans un message SEND_COMPONENT au CAA, qui la transmet à la borne 13 à l'aide d'un message FACILITY du protocole DSS1+. La réponse du mobile à l'authentification est retournée par la borne 13 dans un autre message FACILITY puis jusqu'au PCS 15 dans un message COMPONENT_RECEIVED du protocole INAP. Le PCS 15 vérifie que l'abonné mobile est correctement authentifié, puis il procède à une nouvelle transaction avec la BDS 14 pour obtenir le profil de service de l'abonné. Le PCS 15 envoie alors un message INSERT_ABONNE au CAA 10 pour transmettre le profil de l'abonné mobile. Les données de service de ce profil sont écrites par le CAA dans sa table TAB, comme si l'abonné était fixe. Le CAA renvoie au PCS 15 un message CONFIRM_INSERT, à la suite duquel le PCS termine ses traitements en faisant effacer, s'il y a lieu, les données de service de l'abonné de la table de son ancien CAA de rattachement, en allouant et en fournissant à la BDS 14 un nouveau numéro d'acheminement pour l'abonné mobile, et en renvoyant un message RELEASE_ASSOCIATION vers le nouveau CAA. La fin de la mise à jour de localisation est signalée au terminal mobile 12 via les interfaces DSS1+ et DECT.

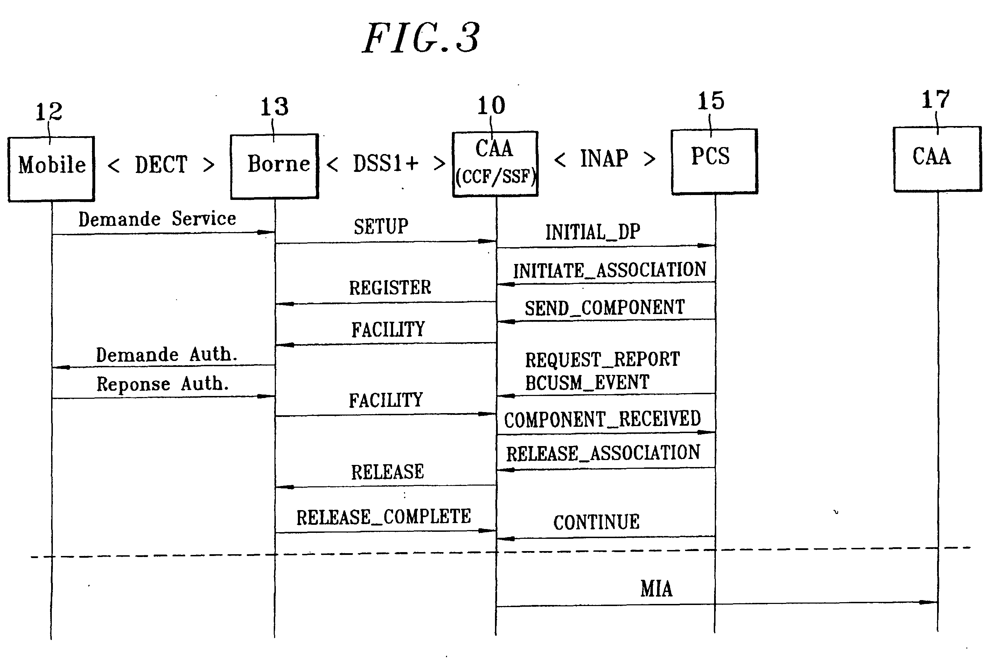

Pour effectuer un appel sortant (figure 3), ou demander un autre service, le terminal mobile 12 émet un message de demande de service sur l'interface radio, que la borne 13 et les fonctions CCF et SSF du CAA 10 relaient jusqu'au PCS de gestion de la mobilité 15 au moyen de messages SETUP du protocole DSS1+ et INITIAL_DP du protocole INAP. Comme dans le cas de la procédure de localisation, le fait que la demande de service provienne d'un abonné mobile est détecté par le CAA sur la base soit de l'identité du port de raccordement, soit d'une information spécifique insérée dans le protocole.DSS1+ Le PCS 15 procède à une authentification du terminal mobile 12 de la même manière que précédemment, puis il se retire en transmettant à la fonction SSF du CAA 10 un message RELEASE_ASSOCIATION du protocole INAP si l'authentification est réussie. Un message RELEASE du protocole DSS1+ est transmis à la borne radio 13 pour lui indiquer qu'elle peut poursuivre la procédure d'établissement de l'appel. A partir du moment repéré par un trait interrompu sur la figure 3, l'appel est géré par le CAA 10 de la même manière que s'il provenait d'un terminal fixe (le CAA 10 commence par transmettre un message initial d'adressage (MIA) sur l'interface ISUP vers le CAA 17 du demandé). Si un service particulier doit être exécuté, la fonction CCF pourra procéder aux détections et actions correspondantes à l'aide du profil de service de l'abonné mobile consulté dans la table TAB, comme si l'abonné était fixe.

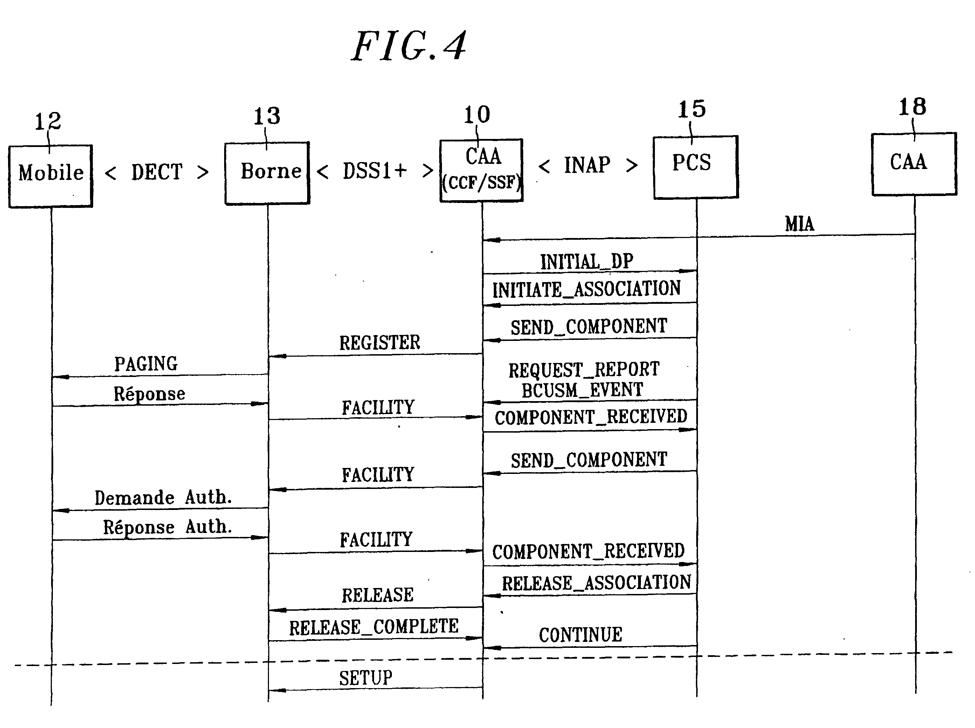

Dans le cas d'un appel destiné à un abonné mobile, le CAA du demandeur, après avoir reconnu que l'appel est destiné à un mobile (par exemple sur la base d'un préfixe ou d'un indicatif particulier de la numérotation), interroge le PCS de gestion de la mobilité pour connaître l'adresse du CAA visité. Le PCS 15 obtient cette adresse en interrogeant la BDS 14, et la retourne au CAA du demandeur. Le CAA 18 du demandeur adresse alors au CAA visité 10 un message initial d'adressage (MIA) (figure 4) contenant le numéro de l'abonné mobile. Le CAA visité adresse alors au PCS 15 un message INITIAL_DP du protocole INAP, auquel le PCS 15 répond en commandant une recherche (paging) de l'abonné mobile, dans des messages INITIATE_ASSOCIATION et SEND_COMPONENT. Cette commande de recherche est acheminée jusqu'au terminal mobile 12, et si celui-ci y répond, le PCS 15 procède à une authentification du terminal mobile 12 de la même manière que précédemment, puis il se retire en transmettant à la fonction SSF du CAA 10 un message RELEASE_ASSOCIATION du protocole INAP si l'authentification est réussie. A partir du moment repéré par un trait interrompu sur la figure 4, l'appel est géré par le CAA 10 de la même manière que s'il était destiné à un terminal fixe (il commence par transmettre un message SETUP du protocole DSS1+ à la borne 13 auprès de laquelle l'abonné mobile a été trouvé) . Lorsque le traitement de l'appel implique la consultation du profil de service de l'abonné mobile, la fonction CCF du CAA 10 interroge la table TAB comme si l'abonné était fixe.

## Revendications

1. Réseau de télécommunications comprenant : des commutateurs d'accès (10) qui comportent chacun une table (TAB) contenant des données de service relatives à des abonnés fixes pourvus de terminaux (11) qui lui sont reliés de façon permanente ; et au moins une base de données nominale (14) pour des abonnés mobiles capables d'accéder au réseau par l'intermédiaire de plusieurs des commutateurs d'accès, la base de données nominale contenant, pour chacun des abonnés mobiles, des données de service de même nature que les données de service relatives aux abonnés fixes et des données de gestion de mobilité, dans lequel la table de données de service de chaque commutateur d'accès par l'intermédiaire duquel des abonnés mobiles sont capables d'accéder au réseau est prévue pour recevoir, outre les données de service relatives aux abonnés fixes, les données de service relatives aux abonnés mobiles raccordés au réseau par l'intermédiaire dudit commutateur d'accès, qui ont été téléchargées depuis la base de données nominale lors de procédures de localisation desdits abonnés mobiles auprès du commutateur d'accès.

## Patentansprüche

1. Fernmeldenetz mit: Zugangsvermittlungseinrichtungen (10), die jeweils eine Tabelle TAB umfassen, welche Dienstdaten betreffend feste Teilnehmer enthält, die mit permanent an es angeschlossenen Endgeräten (11) ausgestattet sind; und wenigstens einer nominellen Datenbank (14) für mobile Teilnehmer, die in der Lage sind, über mehrere der Zugangsvermittlungseinrichtungen auf das Netz zuzugreifen, wobei die nominelle Datenbank für jeden der mobilen Teilnehmer Dienstdaten der gleichen Art wie die die festen Teilnehmer betreffenden Dienstdaten und Mobilitätsverwaltungsdaten enthält, wobei die Dienstdatentabelle jeder Zugangsvermittlungseinrichtung, über welche die mobilen Teilnehmer in der Lage sind, auf das Netz zuzugreifen, vorgesehen ist, um neben den die festen Teilnehmer betreffenden Dienstdaten die Dienstdaten aufzunehmen, welche die über diese Zugangsvermittlungseinrichtung an das Netz angeschlossenen mobilen Teilnehmer betreffen und die von der nominellen Datenbank bei Prozeduren der Lokalisierung der mobilen Teilnehmer bei der Zugangsvermittlungseinrichtung ferngeladen worden sind.

## Claims

1. A telecommunications network comprising : access switches (10), each of which has a table (TAB) containing service data relating to fixed subscribers having terminals (11) permanently connected thereto ; and at least one nominal data base (14) for mobile subscribers capable of accessing the network via a plurality of the access switches, wherein the nominal data base contains, for each of the mobile subscribers, service data of the same nature as the service data relating to fixed subscribers and mobility management data, and wherein the service data table of each access switch via which mobile subscribers can access the network is arranged to receive, in addition to the service data relating to the fixed subscribers, service data relating to the mobile subscribers connected to the network via said access switch, which have been uploaded from the nominal data base during procedures to locate said mobile subscribers with the access switch.
